Europäisches Patentamt

European Patent Office

Office européen des brevets

(11) Publication number: **0 503 567 A1**

# EUROPEAN PATENT APPLICATION

(21) Application number: **92104101.8**

(22) Date of filing: **10.03.92**

(51) Int. Cl.⁵: **C08K 3/26**, C08L 67/02,
C08J 5/18

(30) Priority: **12.03.91 JP 46955/91**

(43) Date of publication of application:
**16.09.92 Bulletin 92/38**

(84) Designated Contracting States:
**DE FR GB IT LU NL**

(71) Applicant: **DIAFOIL HOECHST CO., LTD.**
**3-2, Marunouchi 2-chome, Chiyoda-ku**
**Tokyo(JP)**

(72) Inventor: **Sakamoto, Seiji, Daiahoiru Hekisuto**
**K.K.**
**Chuokenkyusho-nai, 1000 Kamoshida-cho,**
**Midori-ku**
**Yokohama-shi(JP)**
Inventor: **Meguro, Yoshio, Daiahoiru Hekisuto**
**K.K.**
**Chuokenkyusho-nai, 1000 Kamoshida-cho,**
**Midori-ku**
**Yokohama-shi(JP)**

(74) Representative: **TER MEER - MÜLLER -**
**STEINMEISTER & PARTNER**
**Mauerkircherstrasse 45**
**W-8000 München 80(DE)**

(54) **Biaxially oriented polyester film.**

(57) There is disclosed a biaxially oriented polyester film characterized by containing 0.05-3 wt% of calcium carbonate particles each comprising 5-200 primary particles having an average particle diameter of 0.02-0.2 μm and 0.01-0.5 wt% of inorganic or organic particles having an average particle diameter of 0.2-2 μm. this film has excellent abrasion resistance and slipperiness.

EP 0 503 567 A1

The present invention relates to a biaxially oriented polyester film having excellent abrasion resistance and slipperiness and being suitable for the base film of magnetic recording media.

Biaxially oriented films of polyethylene terephthalate and polyethylene 2,6-naphthalate are today widely used as industrial films, especially as the base films for magnetic recording media.

However, these films are insufficient in abrasion resistance and often produce abrasion debris powder owing to high speed sliding contact with apparatus parts when they are used in magnetic recording media and thus the media exhibit poor electromagnetic properties. They are also not entirely sufficient in slipperiness and they are not satisfactory in handling property and workability.

It is well known to incorporate a suitable amount of particles of a suitable size in the film in order to overcome the above-described problems and, while this technique has been successful to some extent, it is still not sufficient.

We conducted an intensive study in order to solve the above-described problems and found that the problems can be effectively overcome by incorporating in the film a combination of calcium carbonate particles each comprising a plurality of primary particles having a particular particle diameter and a second kind of particles. Thus we invented the polyester film of this application.

The gist of the present invention resides in a biaxially oriented polyester film characterized by containing 0.05-3 wt%, preferably 0.07-2.5 wt% of calcium carbonate particles comprising 5-200, preferably 8-180 primary particles having an average particle diameter of 0.02-0.2 $\mu$m preferably 0.03-0.1 $\mu$m and 0.01-0.5 wt%, preferably 0.02-0.4 wt% of inorganic or organic particles having an average particle diameter of 0.2-2 $\mu$m.

The invention is described below in detail.

In the present invention, the term "polyester" means a polyester comprising 80 % or more, preferably 90 % or more of ethylene terephthalate repeating units or ethylene 2,6-naphthalate units.

The term "polyester film" means biaxially oriented polyester film made from the above-described polyester, which can be prepared by any known method. Usually, the polyester film is prepared by melt-extruding the polyester at 270-320 °C to form a sheet, cooling the sheet to solidify it at 40-90 °C, sequentially or simultaneously stretching the sheet longitudinally and transversally and heat-treating the resulting sheet at 160-250 °C,that is, by the method as described in Japanese Patent Publication No. Sho 30-5689 for instance. The longitudinal and transversal stretching can be carried out in one step or in two or more steps and a heat treatment step or steps can be interposed for relaxation of orientation, as desired. The thus obtained film can be further stretched after the biaxial stretching and before the heat treatment of the next step. This additional stretching can be carried out in either or both the of longitudinal and transversal directions.

The most specific feature of the present invention is the use of coagulated calcium carbonate particles comprising fine primary particles as the particles to be incorporated in the film. According to our finding, coagulated particles are not easily removed from the surface of the film and form rather gentle protrusions when the film is stretched because the stretching stress is appropriately dispersed within the particle. Therefore, the resulting film in most cases exhibits desirable friction and abrasion properties in contrast with the film using simple particles. Especially, calcium carbonate particles have relatively good affinity to polyester and produce little abrasion debris powder, probably because of their suitable hardness. Employment of the above-described calcium carbonate particles reduces tension fluctuation of the film which is a main cause of jitter among magnetic recording characteristics of magnetic recording film.

The primary particles of calcium carbonate particles to be used in the present invention have an average particle diameter of 0.02-0.2 $\mu$m, preferably 0.03-0.1 $\mu$m. With primary particles having an average particle diameter less than 0.02 $\mu$m, the coagulated particles exhibit strong coherency and do not collapse under the stretching stress and thus cannot exhibit the specific effect of the present invention. With primary particles having an average particle diameter in excess of 0.2 $\mu$m, the coagulated particles break up and drop off when the film is stretched and the dropped-off powder degtrades-the electromagnetic characteristics of the magnetic recording film containing them.

The degree of coagulation (number) of primary particles of calcium carbonate particles used in the present invention is 5-200, preferably 7-100. When the degree (number) below the above range, abrasion resistance and resistance to tension fluctuation are not improved. On the contrary, when the degree is in excess of the above range, coarse protrusions form and electromagnetic properties of the film are degraded.

The mixing ratio of the calcium carbonate particles to polyester is 0.05-3 wt%. The incorporation of less than 0.05 wt% does not improve abrasion resistance and resistance to running tension fluctuation. The incorporation of more than 3 wt% makes the surface too rough.

Preferably, the particle diameter, degree of coagulation and incorporation ratio of the coagulated particles or this first kind of particles should properly selected so that the surface roughness (Ra) falls in a range of 0.005-0.03 μm.

As the calcium carbonate particles, pulverized natural calcium carbonate can be used. But the so-called light calcium carbonate, which is a synthesized calcium carbonate is preferred. The crystal form of the calcium carbonate may be any of calcite, alagonite and baterite and the shape of the particle may be lump, rod, spindle, etc. The surface of the particles may be coated with a fatty acid, resinous acid, cathionic surfactant, etc.

The cagulated particles used in the present invention can generally be obtained by pulverizing coarse coagulated particles. Pulverization can be carried out with a rod mill, ball mill, vibration rod mill, pan mill, roller mill, impact mill, agitation trituration mill, fluid energy mill, etc., for instance. Ultrasonic dispersion treatment can be applied, if desired. However, if it is excessively applied, the coagulated particles are dispersed into primary particles. Therefore, ultrasonic dispersion must be employed with caution. Needless to say, screening, filtration and other treatments can be employed in the present invention.

The coagulated particles can be most suitably incorporated by adding said particles in the reaction system of the polyester synthesis, in the early stage of the reaction in the form of a slurry in ethylene glycol. However, the particles can also be directly blended with the polyester before it is made into film.

In the present invention, several characteristics of polyester film required as a base film for magnetic recording media are improved by incoporating the specific calcium carbonate particles. Only with the addition of said particles, however, the slipperiness of the resulting film is still insufficient and also the abrasion resistance is not entirely satisfactory. Therefore, a second kind of inorganic or organic particles are added.

Such particles are so-called deposited particles. This is fine metallic compound particles deposited during preparation of the polyestrer. For instance, inert fine particles are deposited before, during or after the transesterification reaction or esterification reaction in the presence of an alikali metal or metals or an alkali metal compound or compounds with or without a phosphoric acid compound or compounds.

Another category of the particles are so-called added particles. This is fine particles which are added in the course of the preparation of polyester. Usable specific particles are those of kaolin, talcum, carbon, molybdenum sulfide, gypsum, rock salt, calcium carbonate, barium sulfate, lithium fluoride, calcium fluoride, zeolite, calcium phosphate, silicon dioxide, titanium dioxide, etc.

The added particles may also be heat-resistive high polymer fine particles. A typical example is particles of a copolyer of a monovinyl compound having only one aliphatic unsaturated bond in the molecule thereof and a compound having two or more alipahtic unsaturated bonds in the molecule thereof as a cross-linker as disclosed in Japanese Patent Publication No. Sho 59-5216. It is not limited to this but fine particles of thermosetting phenol resin, thermosetting epoxy resin, thermosetting urea resin, benzoguanamine resin, etc., or fluorine resins such as polytetrafluoroethylene can also be used.

As the second kind of particles, those which can be satisfactorily dispersed in the polyester and substantially do not coagulate are used. The average particle diameter is 0.2-2 μm, preferably 0.3-1 μm. These particles are blended with the polyester in an amount of 0.01-05 wt%, preferably 0.02-0.4 wt%. When the particle diameter and the blending ratio are less than the above ranges, slipperiness of the resulting film is insufficient. When they are higher than the above range, the surface roughness of the film becomes too large.

In the present invention, in addition to the above described two kinds of particles, coagulated aluminum oxide particles as disclosed in Japanese Laying-Open Patent Publication No. Hei 3-6239 can be used. By the addition thereof, the resulting film is provided with scratch resistance, that is, the film becomes less suscepticle to scratching damage when it slidingly contacts apparatus parts. Specifically, the third kind of particles should be coagulated particles of primary particles having an average particle diameter of 0.005-0.04 μm, and should have an average particle diameter of 0.04-0.4 μm. The particles having a δ crystal form are preferred and addition thereof in an amount of 0.05-3 wt% will provide the film with better characteristics.

The films obtained in accordance with the present invention have excellent abrasion resistance and running property and thus can be used in various applications.

The invention will now be described below in details by way of examples. However, the scope of the present invention is not limited to these examples but limited by the gist of the invention as defined in the claims. In the following examples, the term "parts" means parts by weight. The methods of measurements employed in the examples are as follows.

(1) Average particle diameter and degree of coagulation

The particle diameters of the primary particles and the coagulated paraticles of the first kind of particles were measured by observing the cross section of the film with a transmission electron microscope. Average particle size is the particle diameter at the 50 % volume percentage of the equivalent sphere.

In the same manner, the number of primary particles constituting a coagulated particle was counted and the average was calculated.

Average particle diameter and degree of coagulation of the particles of the second and third kinds of particles were measured in the same manner.

(2) Surface roughness of film

Center line average roughness Ra($\mu$m) was measured in accordance with the stipulations of JIS B0601.

(3) Running property

A film was contacted with the circunferential surface of a hard-chromium-plated metal pin (6 mm in diameter) over an angle of 135°. A weight of 53 g was attached to one end of the film and the film was slid over the pin at the rate of 1 m/min and the resistance at the other end was measured. The fiction coefficient was calculated in accordance with the Euler equation and used as an index of running property.

(4) Abrasion resistance

A film was contacted with the circumferential surface of a hard-chromium-plated metal pin (6 mm in diameter) over an angle of 135°. The film was slid around the pin with a tension of 200 g over 1000 m. The amount of white powder produced was visually observed and the results were rated as follows:
A: No powder observed
B: A slight amount of adhering powder
C: A small amount (more than B) of adhering powder
D: A large amount of adhering powder

(5) Scratch resistance

The flaws formed on the film surface when the film was slid over the surface of the metal pin were observed.

That is, a film was contacted with the circumferentail surface of a hard-chromium-plated metal pin (6 mm in diameter and having a surface roughness of 3R) over an angle of 135°. The film was slid over the pin with a tension of 50 g at a rate of 4 m/sec.

Aluminum was deposited by vacuum vapor deposition on the surface of the film which has undergone the above sliding and the flaws were observed. The degree of flaw was rated as follows.
1: A large number of flaws, many deep
2: Relatively many flaws, some deep
3: Relatively few flaws, few deep
4: A few flaws
5: Hardly any flaws

(6) Magnetic properties

A magnetic tape was prepared by forming a magnetic layer on the surface of the film and the number of drop-out and tension fluctuation which causes jitter were measured.

Specifically, 200 parts of fine magnetic powder, 30 parts of polyurethane resin, 10 parts of nitrocellulose, 10 parts of vinyl chloride-vinyl acetate copolymer, 5 parts of lecithin, 100 parts of cyclohexanone, 100 parts of methylisobutylketone and 300 parts of methylethylketone were mixed and dispersed in a roll mill for 48 hours. To the thus obtained mixture, 5 parts of a polyisocyanate compound to form a magnetic coating material. The coating material was applied on a polyester film base and the magnetic material was magnetically oriented before the coating was dried and solidified. The coated film was treated with a super-calender and slitted into 1/2 inch tapes, which were used as video tapes.

The number of dropouts was measured by replaying a video tape (3) recorded with video signals of 4.4 MHz and the number of drop-outs was counted over about 20 minutes and the results were converted to values per minute.

Tension fluctuation was measured as follows. A magnetic tape was contacted with a fixed metal pin over 135° and slid over the pin surface with a tension of about 50 g at a rate of 10 cm/sec. When the tension fluctuation was less than 7 %, the tape was rated . When the tesion fluctuation was less 7-13 %, the tape was rated and when the tension flucuation was over 13 %, the tape was rated x.

Example 1

Lump light calcium carbonate comprising primary particles having an average particle diameter of 0.05 µm were dispersed in ethylene glycol and slowly triturated to form a slurry comprising coagulated calcium carbonate particles.

The slurry was added to the reaction product of dimethyl terephthalate and ethylene glycol and polycondensation was allowed to proceed by the conventional method. There was obtained polyethylene terephthalate (A), which contained 0.3 wt% of calcium carbonate and had an intrinsic viscosity of 0.63.

Separately, using spherical silica which was obtained by hydrolysis of tetraethoxysilane and had an average particle diameter of 0.6 µm, polyethylene terephthalate (B), which contained 0.03 wt% of said silica particles and had an intrinsic viscosity of 0.63, was obtained

Polyester (A) and polyester (B) were blended in the ratio of 2:1, the blend was extruded into a sheet and the sheet was cooled with application of static charge. Thus an amorphous sheet was obtained. The sheet was stretched in the longitudinal direction by a factor of 3.5 at 105 °C, in the transversal direction by a factor of 3.5 at 120 °C and finally heat-treated at 225 °C. Thus a biaxially oriented film having a thickness of 15 µm was obtained, The degree of coagulation of the primary particles was 15 primary particles per coagulated particle. The characteristics of the film were quite satisfactory as shown in Table 1.

Example 2-3 and Comparative Example 1-3

The procedures of Example 1 were repeated except that the conditions of used particles were varied as indicated in Table 2. Characteristics of the obtained films were evaluated.

All the films in which species, particle diameter and content satisfied the requirements of the present invention exhibited excellent abrasion resitance and slipperiness as well as good electromagnetic properties. In contrast, the films which lacked any of the requirements of the present invention were inferior in performance.

Example 4

A polyester film, which was the same as that of Example 1 but further contained as a third kind of particles 0.30 wt% of secondary coagulated particles of delta-alumina having an average particle diameter of 0.05 µm and comprising primary particles having an average particle size of 0.02 µm as a third kind particles, was prepared and the properties thereof were evaluated.

The results were shown in Table 2 together with the results of Example 1. This film had an excellent scratch resistance and exhibited a grade better magnetic recording performance.

The film of the present invention has excellent abrasion resistance and slipperiness and can be used in various applications. Especially, it is suitable as a base film for magnetic recording media. It is recommendable as a base film of video tapes and exhibits excellent effect when used for audio tapes. Recently, two deck radio cassette player, component stereos, and the like featuring high-speed dubbing twice much as the conventional players have been popular in the market. In these machines, the tapes slide in contact with the apparatus parts at very high speeds during dubbing, fast forwarding and rewinding operation. In such case, the film of the present invention best manifests its excellent performance under such conditions.

Table 1

| | 1st Particles (CaCO$_3$) | | | 2nd Particles | | | Evaluation of Film | | | | |
|---|---|---|---|---|---|---|---|---|---|---|---|
| | Primary Particles ($\mu$m) | Degree of Coag. | Cont. (wt%) | Species | Particle diam. ($\mu$m) | Cont. (wt%) | Surface Roughness Ra ($\mu$m) | Runn'g Prop'ty | Abr. Resist. | Drop-Out | Tens'n Fluc. |
| 1 | 0.05 | 15 | 0.2 | | 0.6 | 0.1 | 0.016 | 0.35 | A | 2.0 | ○ |
| 2 | 0.05 | 15 | 0.2 | | 0.5 | 0.2 | 0.018 | 0.34 | A | 2.1 | ○ |
| 3 | 0.15 | 10 | 0.15 | | 0.7 | 0.1 | 0.020 | 0.33 | A | 1.9 | ○ |
| 1 | 0.05 | 1.5 | 0.2 | — | — | — | 0.007 | 0.50 | B~C | 4.0 | × |
| 2 | 0.05 | 3 | 0.2 | | 0.4 | 0.2 | 0.014 | 0.37 | C | 8.6 | △ |
| 3 | 0.03 | 250 | 0.1 | | 0.4 | 0.2 | 0.020 | 0.35 | C | 10.1 | △ |

EP 0 503 567 A1

Table 2

| | 3rd Kind of Particles | Evaluation of Film | | | | | |
|---|---|---|---|---|---|---|---|
| | | Surface Roughness Ru ($\mu$m) | Running prop'ty | Abrasion Resist | Drop-Out | Tens'n Fluc. | Abrasion Resist. Rating |
| Ex.1 | — | 0.016 | 0.35 | A | 2.0 | O | 2 |
| Ex.4 | Aluminum Oxide | 0.017 | 0.35 | A | 1.9 | O | 5 |

## Claims

1. A biaxially oriented polyester film characterized by containing 0.05-3 wt% of calcium carbonate particles each comprising 5-200 primary particles having an average particle diameter of 0.02-0.2 $\mu$m and 0.01-0.5 wt% of inorganic or organic particles having an average particle diameter of 0.2-2 $\mu$m.

2. A biaxially oriented polyester film as claimed in claim 1, characterized by containing 0.07-2.5 wt% of calcium carbonate particles comprising 8-180 primary particles each having an average particle diameter of 0.03-0.1 $\mu$m and 0.02-0.4 wt% of inorganic or organic particles having an average particle diameter of 0.2-2 $\mu$m.

3. A biaxially oriented polyester film characterized by containing 0.05-3 wt% of calcium carbonate particles each comprising 5-200 primary particles having an average particle diameter of 0.02-0.2 $\mu$m,

0.01-0.5 wt% of inorganic or organic particles having an average particle diameter of 0.02-0.2 μm and 0.05-3 wt% of aluminum oxide particles having an average particle diameter of 0.04-0.4 μm.

4. A biaxially oriented polyester film as claimed in claim 3, wherein said aluminum oxide is delta-aluminum oxide.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 152 265 (TOYO BOSEKI KK; KABUSHIKI KAISHA NIPPON MAGPHANE)<br>* reference example 7 *<br>* claims 1-5,7-8 *<br>--- | 1,2 | C08K3/26<br>C08L67/02<br>C08J5/18 |
| A | EP-A-0 139 203 (TOYO BOSEKI KK; KABUSHIKI KAISHA NIPPON MAGPHANE)<br>* page 4, paragraph 3 - page 5, paragraph 1; claims 1,3,4,9 *<br>--- | 1-2 | |
| A | EP-A-0 378 154 (TORAY INDUSTRIES, INC.)<br>* claims 1-3,8,16,20; examples 1,5 *<br>----- | 1-4 | |
| | | | TECHNICAL FIELDS SEARCHED (Int. Cl.5)<br><br>C08K<br>C08J |

The present search report has been drawn up for all claims

| Place of search | Date of completion of the search | Examiner |
|---|---|---|
| THE HAGUE | 25 MAY 1992 | FUHR C.K.B. |